# EUROPEAN PATENT APPLICATION

(11) **EP 3 817 370 A1**
(43) Date of publication of application: **05.05.2021**
(21) Application number: 18924885.9
(22) Date of filing: 29.06.2018
(51) Int. Cl.: H04N 7/18, H04N 5/232

(54) **TIME-LAPSE PHOTOGRAPHY CONTROL METHOD AND CONTROL DEVICE, IMAGING SYSTEM, AND STORAGE MEDIUM**

(71) Applicant: SZ DJI Technology Co., Ltd., Shenzhen, Guangdong 518057 (CN)
(72) Inventor: FAN, Qinghe, Shenzhen, Guangdong 518057 (CN); ZHAO, Tao, Shenzhen, Guangdong 518057 (CN)
(74) Representative: Goddar, Heinz J.
(86) International application number: PCT/CN2018/093740
(87) International publication number: WO 2020/000394

(57) **Abstract**

A time-lapse imaging control method and control device (20), an imaging system (100), and a computer-readable storage medium (1000). The time-lapse imaging control method is used to control the imaging system (100). The imaging system (100) includes a gimbal (30) and an image device (10). The imaging device (10) being mounted on the gimbal (30). The control method includes the processes of determining a target feature being tracked by the imaging device (10), and determining a time-lapse imaging parameter of the imaging device (10) for recording (S01); driving the gimbal (30) to drive the imaging device (10) to move to track the target feature, such that the target feature is positioned within a predetermined range in a preview image; and controlling the imaging device (10) to capture a plurality of frames of images including the target feature with the time-lapse imaging parameter (S03).

## Description

### TECHNICAL FIELD

The present disclosure relates to the field of imaging technology and, more specifically, to a time-lapse imaging control method, a time-lapse imaging control device, an imaging system, and a computer-readable storage medium.

### BACKGROUND

Using time-lapse imaging, a plurality of images can be captured, and the plurality of images can be combined into a short video. The playback of the short video can have the effect of reflecting the changes of the scene over time, and can deliver a strong visual effect. However, the generally time-lapse imaging method can only capture images of relative stationary objects, which limits the user's creativity.

### SUMMARY

Embodiments of the present disclosure provide a time-lapse imaging control method, a time-lapse imaging control device, an imaging system, and a computer-readable storage medium.

The time-lapse imaging control method of the embodiment of the present disclosure is used to control an imaging system. The imaging system includes a gimbal and an imaging device, and the imaging device is mounted on the gimbal. The control method includes determining a target feature being tracked by the imaging device, and determining a time-lapse imaging parameter used by the imaging device for recording; driving the gimbal to drive the imaging device to move to track the target feature, causing the target feature to be positioned within a predetermined range in a preview image; and controlling the imaging device to capture a plurality of frames of images including the target feature with the time-lapse imaging parameter.

The time-lapse imaging control device of the embodiment of the present disclosure is used to control an imaging system. The imaging system includes a gimbal and an imaging device. The imaging device is mounted on the gimbal and is configured to determine a target feature being tracked by the imaging device, and determine a time-lapse imaging parameter used by the imaging device for recording; drive the gimbal to drive the imaging device to move to track the target feature, causing the target feature to be positioned within a predetermined range in a preview image; and control the imaging device to capture a plurality of frames of images including the target feature with the time-lapse imaging parameter.

The imaging system of the embodiment of the present disclosure includes a gimbal, an imaging device, the imaging device being mounted on the gimbal; and the control device described in the above embodiment.

The one or more non-volatile computer-readable storage medium of the embodiment of the present disclosure includes computer-executable instructions. When the computer-executable instructions are executed by one or more processors, the processors are caused to execute the time-lapse imaging control method described in the foregoing embodiment.

In the time-lapse imaging control method, time-lapse imaging control device, imaging system, and computer-readable storage medium of the embodiments of the present disclosure, the imaging device can be driven to track the target feature, such that the target feature can be positioned within a predetermined range in the preview image, such that the user can perform time-lapse imaging for the target feature in motion. Even if the target feature itself moves or the imaging system itself moves, the imaging device can still track the target feature, such that the target feature can be positioned within the predetermined range of the preview image, thereby broadening the user's creative space.

Additional aspects and advantages of the technical solutions of the present disclosure will be partially provided in the following descriptions, and partially become obvious from the following descriptions. Alternatively, the additional aspects and advantages of the technical solutions can be understood from practicing the various embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
FIG. 1, FIG. 3, FIG. 7 to FIG. 16, FIG. 18, FIG. 20, FIG. 22 to FIG. 29, and FIG. 31 to FIG. 33 are flowcharts of a time-lapse imaging control method according to some embodiments of the present disclosure.
FIG. 2, FIG. 17, FIG. 19, and FIG. 21 are diagrams of a structure of an imaging system according to some embodiments of the present disclosure.
FIG. 4 to FIG. 6, and FIG. 30 are schematic diagrams of images captured by an imaging device according to some embodiments of the present disclosure.
FIG. 34 is a block diagram of a gimbal control according to some embodiments of the present disclosure.
FIG. 35 is a schematic diagram of a computer-readable storage medium and a module of a processor according to some embodiments of the present disclosure.

### DETAILED DESCRIPTION OF THE EMBODIMENTS

The embodiments of the present disclosure are further described below with reference to the accompanying drawings. The same or similar reference numerals in the drawings indicate the same or similar elements or elements having the same or similar functions.

In addition, the embodiments of the present disclosure described below with reference to the drawings are exemplary, and are only used to explain the embodiments of the present disclosure, and should not be construed as limiting the present disclosure.

In the present disclosure, unless explicitly stated and defined otherwise, the first feature "above" or "below" the second feature may be that the first feature and the second feature are in direct contact, or that the first feature and the second feature are in indirect contact via an intermediate medium. Moreover, the first feature is "above" the second feature may be that the first feature is directly above or obliquely above the second feature, or it only indicates that a horizontal height of the first feature is greater than the horizontal height of the second feature. The first feature is "below" the second feature may be that the first feature may be directly below or obliquely below the second feature, or it may simply indicate that a horizontal height of the first feature is less than the horizontal height of the second feature.

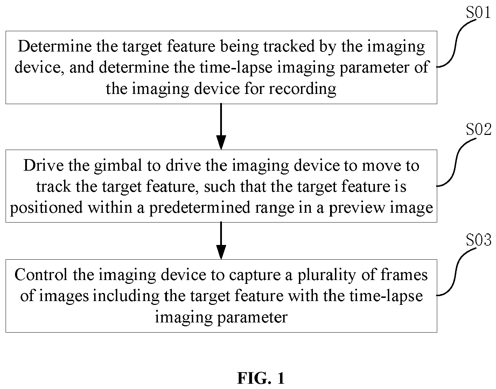

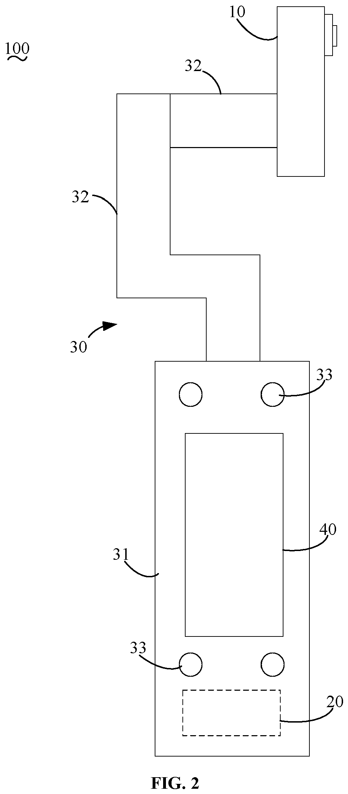

Referring to FIG. 1 and FIG. 2, the time-lapse imaging control method of the embodiment of the present disclosure can be used to control an imaging system 100 of the embodiment of the present disclosure. The imaging system 100 includes a gimbal 30 and an imaging device 10, and the imaging device 10 is disposed on the gimbal 30. The time-lapse imaging control method includes the following processes.

S01, determining a target feature being tracked by the imaging device 10, and determining a time-lapse imaging parameter of the imaging device 10 for recording.

S02, driving the gimbal 30 to drive the imaging device 10 to move to track the target feature, such that the target feature may be positioned within a predetermined range in a preview image.

S03, controlling the imaging device 10 to capture a plurality of frames of images including the target feature with the time-lapse imaging parameter.

The imaging system 100 of the embodiment of the present disclosure may include the gimbal 30, the imaging device 10, and a control device 20, where the control device 20 may be used to implement the control method of the embodiment of the present disclosure. More specifically, the control device 20 can be used to implement the processes at S01, S02, and S03. That is, the control device 20 can be used to determine the target feature being tracked by the imaging device 10, and determine the time-lapse imaging parameter of the imaging device 10 for recording; drive the gimbal 30 to drive the imaging device 10 to move to track the target feature, such that the target feature may be positioned within a predetermined range in a preview image; and control the imaging device 10 to capture a plurality of frames of images including the target feature with the time-lapse imaging parameter. The preview image may be generated by the imaging device 10, and may be displayed on a device having a display function to obtain a preview.

In the time-lapse imaging control method and the imaging system 100, the imaging device 10 can be driven to track the target feature, such that the target feature can be positioned within a predetermined range in the preview image, thereby enabling a user to perform time-lapse imaging of the target feature in motion, which broadens the user's creativity.

More specifically, the target feature and the time-lapse imaging parameter may be determined based on the user's input to meet the user's personalized needs when performing the time-lapse imaging. The gimbal 30 may be driven to drive the imaging device 10 to move, such that the target feature may be positioned within a predetermined range of the preview image. That is, the imaging device 10 can track the target feature, even if the target feature moves during the time-lapse imaging, or the imaging device 10 moves due to the user's movement, the imaging device 10 may also be driven to track the target feature, and ensure that the image captured by the imaging device 10 includes the target feature. It should be noted that during the entire time-lapse imaging process, the gimbal 30 may be driven in real time to drive the imaging device 10 to track the target feature. In the process of tracking the target feature, the imaging device 10 may also capture a plurality of frames of images with the time-lapse imaging parameter.

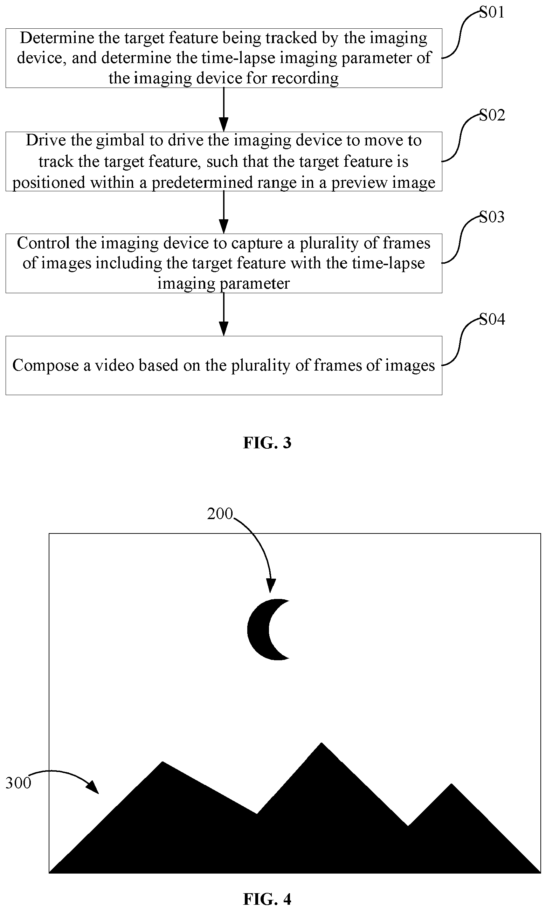

Referring to FIG. 3, in some embodiments, the control method may further include a process S04, composing a video based on the plurality of frames of images.

In some embodiments, the control device 20 may be used to implement to process at S04, that is, the control device 20 may be used to compose a video based on the plurality of frames of images.

A plurality of frames of images can be combined into a video through the transcode function. The time lapse reflected in the video may be faster than the time lapse in the real world. For example, the process of minutes, hours, days, years, etc. in the real world may be reflected in a relatively short video.

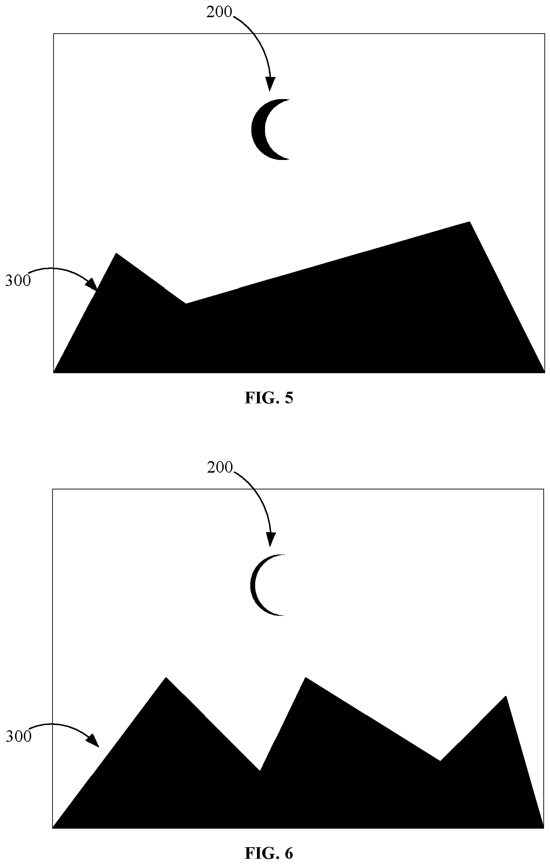

Taking the time-lapse imagery of a total lunar eclipse as an example in conjunction with FIG. 4 to FIG. 6, a target feature 200 can be selected as the moon. During a total lunar eclipse, the area covered by the moon will change and the position of the moon will also change. By driving the imaging device 10 to track the target feature 200 (that is, the moon), the moon can be constantly kept within the predetermined range of the preview image of the imaging device 10, thereby ensuring that the entire lunar eclipse can be observed. During the time-lapse imaging, the imaging device 10 may capture a plurality of frames of images including the moon (as shown in FIG. 4 to FIG. 6). Since the imaging device 10 is tracking the moon, in the captured plurality of frames of images, a background 300 may change, but the target feature 200 of moon can be kept.

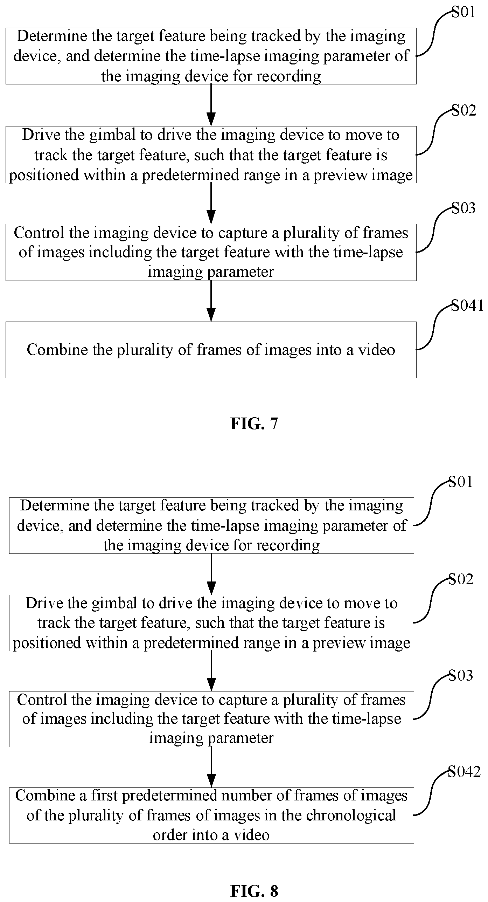

Referring to FIG. 7, in some embodiments, the process at S04 may include a process S041, combining the plurality of frames of images into a video. Correspondingly, the control device 20 may be used to implement the process at S041, that is, the control device 20 may be used to combine the plurality of frames of images into a video. Combining the plurality of frames of images into a video may refer to that during the entire time-lapse imaging process, the plurality of frames of images captured by the imaging device 10 based on the time-lapse imaging parameter may all be used to combine into the video.

Referring to FIG. 8, in some embodiments, the process at S04 may include a process S042, combining a first predetermined number of frames of images of the plurality of frames of images in chronological order into a video. Correspondingly, the control device 20 may be used to implement the process at S042, that is, the control device 20 may be used to combine a first predetermined number of frames of images of the plurality of frames of images in chronological order into a video. More specifically, after the imaging device 10 completes capturing of the plurality of frames of images, the user may determine that the first predetermined number of frames of images can meet the needs of this period of the time-lapse imaging. At this time, the user can select the first predetermined number of frames of images of the plurality of frames of images to be combined into the video. Alternative, in the process of time-lapse imaging, the memory of the imaging system 100 may be insufficient to save all the plurality of frames of images. Therefore, the first predetermined number of frames of images saved can be used to combine into the video.

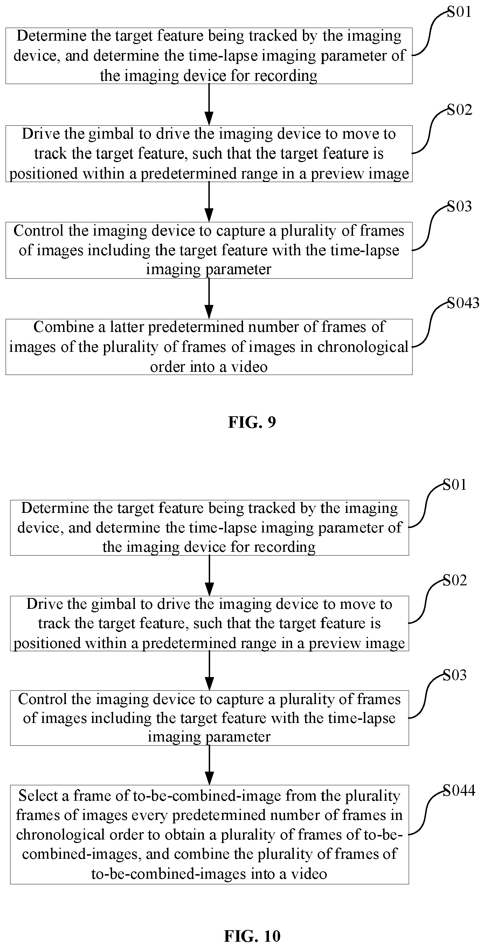

Referring to FIG. 9, in some embodiments, the process at S04 may include a process S043, combining a latter predetermined number of frames of images of the plurality of frames of images in chronological order into a video. Correspondingly, the control device 20 may be used to implement the process at S043, that is, the control device 20 may be used to combine a latter predetermined number of frames of images of the plurality of frames of images in chronological order into a video. More specifically, after the imaging device 10 completes capturing of the plurality of frames of images, the user may determine that the latter predetermined number of frames of images can meet the needs of this period of the time-lapse imaging. At this time, the user can select the latter predetermined number of frames of images of the plurality of frames of images to be combined into the video. Alternative, in the process of time-lapse imaging, the memory of the imaging system 100 may be insufficient to save all the plurality of frames of images. Therefore, the latter predetermined number of frames of images saved can be used to combine into the video.

Referring to FIG. 10, in some embodiments, the process at S04 may include a process S044, selecting a frame of to-be-combined-image from the plurality of frames of images every predetermined number of frames in chronological order to obtain a plurality of frames of to-be-combined-images, and combining the plurality of frames of to-be-combined-images into a video. Correspondingly, the control device 20 may be used to implement the process at S044, that is, the control device 20 may be used to select a frame of to-be-combined-image from the plurality of frames of images every predetermined number of frames in chronological order to obtain a plurality of frames of to-be-combined-images, and combine the plurality of frames of to-be-combined-images into a video. More specifically, after the imaging device 10 completes capturing of the plurality of frames of images, the user may determine that the number of the plurality of frames of images is too much, and some of the images can meet the needs of this period of the time-lapse imaging. At this time, the user may choose to combine the selected to-be-combined-images into a video. In other words, the difference between adjacent frames of several adjacent frames may not be significant enough to reflect the advantages of the time-lapse imaging. At this time, the user may choose to combine the selected to-be-combined-images with differences into a video.

It should be understood that in the embodiments shown in FIG. 8 to FIG. 10, the selection of the to-be-combined-images for combining into the video may also be selected automatically by the control device based on a set rule, which is not limited here.

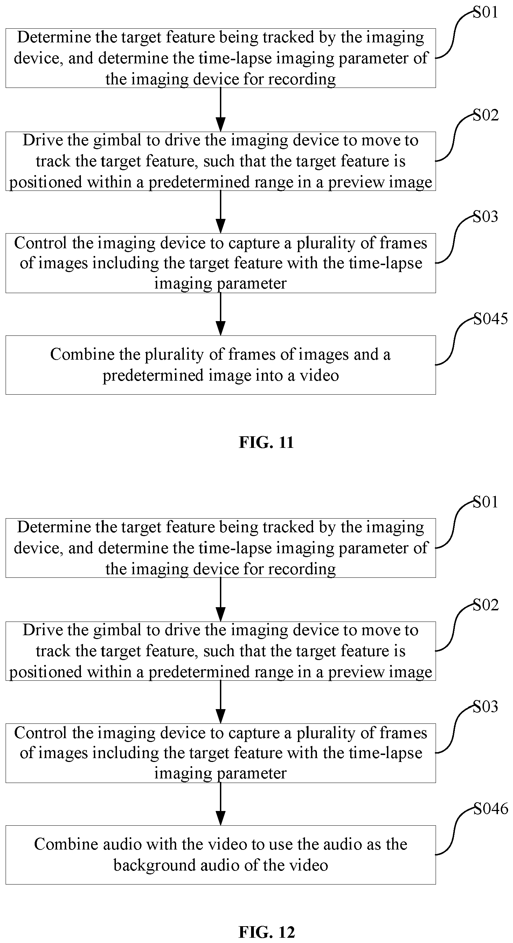

Referring to FIG. 11, in some embodiments, the process at S04 may include a process S045, combining the plurality of frames of images and a predetermined image into a video. Correspondingly, the control device 20 may be used to implement the process at S045, that is, the control device 20 may be used to combine the plurality of frames of images and a predetermined image into a video. More specifically, the predetermined images may be images saved in advance by the user. The predetermined image may be inserted between any two capture images, and the number of the predetermined images may also be set based on the user's preference. In one example, the predetermined image may be used to explain the time-lapse imaging process. Taking the process of capturing a total lunar eclipse in the embodiment of the present disclosure as an example. The images with "first contact," "second contact," "mid totality," "third contact," and "fourth contact" can be added to the plurality of frames of images to indicate the specific process of the total lunar eclipse, such that the video content is easier to understand. This means that in this process, the captured plurality of frames of images can be identified to determine the scene corresponding to the corresponding frame of image and match it with the predetermined image.

Referring to FIG. 12, in some embodiments, the process at S04 may include a process S046, combining audio with the video to use the audio as the background audio of the video. Correspondingly, the control device 20 may be used to implement the process at S046, that is, the control device 20 may be used to combine audio with the video to use the audio as the background audio of the video. The audio may be a predetermined audio, such as a user pre-stored audio; or the audio may be the sound in the environment recorded during the time-lapse imaging; or the audio may be a combination of the predetermined audio and the sound in the environment recorded in the time-lapse imaging. When the video is being played, the background audio may be played synchronously with the video to provide users with a more shocking sensory experience.

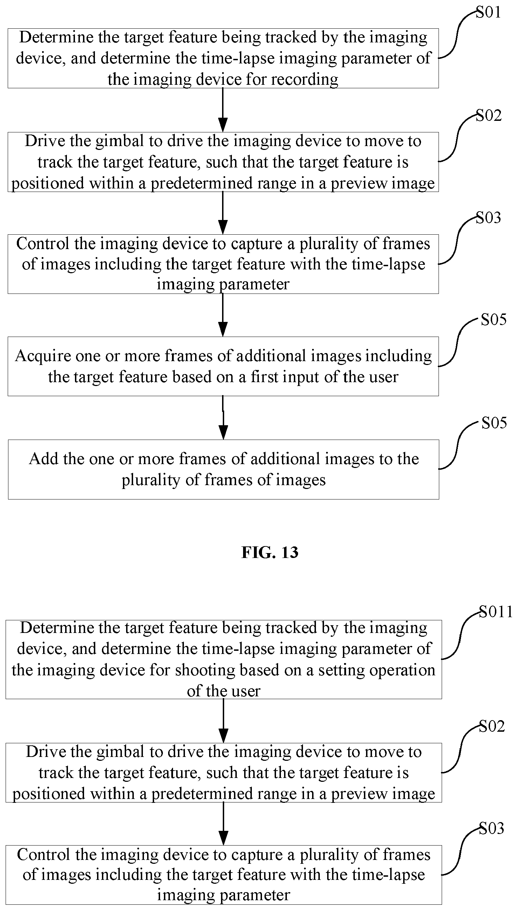

Referring to FIG. 13, in some embodiments, the control method further includes a process S05, in the process of the time-lapse imaging, acquiring one or more frames of additional images including the target feature based on a first input of the user; and a process S06, adding the one or more frames of additional images to the plurality of frames of images.

In some embodiments, the control device 20 may also be used to implement the processes at S05 and S06, that is, the control device 20 may be used to acquire one or more frames of additional images including the target feature based on a first input of the user in the process of time-lapse imaging; and add one or more frames of additional images to the plurality of frames of images.

More specifically, in the process of time-lapse imaging, through observation, the user may determine that the content in a certain period of time is more in line with his needs, and wish to acquire more images of the target feature in that period of time, or, the user may be more interested in a certain image. At this time, the user can perform a first input to control the imaging device 10 to acquire additional images in real time. The first input may be any input that can trigger the imaging device 10 to acquire additional images. For example, the first input may be clicking on the preview image, pressing a predetermined button, etc., which is not limited here. After the additional images are added to the plurality of frames of images, these images can be used to compose the video.

Further, the additional images may be marked. After the time-lapse imaging, the user may select whether to use the additional images to combine into the video, or after the additional images are used to compose the video, a mark display can be obtained in the composed video.

In some embodiments, the time-lapse imaging parameter may include one or more of the following parameters including an imaging time interval of the time-lapse imaging, a duration of the time-lapse imaging, a number of images captured in the time-lapse imaging, and an imaging trajectory of the time-lapse imaging. The imaging time interval of the time-lapse imaging may refer to the imaging interval between two adjacent frames of images. The duration of the time-lapse imaging may refer to the length of time elapsed from the start of the time-lapse imaging to the end to the time-lapse imaging. The number of images captured in the time-lapse imaging may refer to the total number of images captured by the imaging device 10 if the user does not perform additional operations during the time-lapse imaging. The imaging trajectory of the time-lapse imaging may refer to the collection of trajectory points of the positions taken by the imaging device 10 during the time-lapse imaging.

In the above time-lapse imaging parameters, the imaging time interval may be a plurality of equal time intervals. In other words, the imaging interval of two adjacent frames may be equal. In other embodiments, the imaging time interval may include a plurality of unequal time intervals. In other words, the imaging interval of different adjacent frames may be the same or different. For example, in the initial stage of the time-lapse imaging, the imaging time interval may be set to be relatively large, such as taking a frame of image in five minutes. During the climax to the time-lapse imaging, the imaging time interval may be set to be relatively small, such as one frame of image per minute. At the end of the time-lapse imaging, the imaging time interval may be set to be relatively large, such as one frame of image per minute to meet the different needs of the user.

Referring to FIG. 14, in some embodiments, the process at S01 may include a process S011, determining the target feature being tracked by the imaging device 10, and determining the time-lapse imaging parameter of the imaging device 10 for recording based on a setting operation of the user. Correspondingly, the control device 20 may be used to implement the process at S011, that is, the control device 20 may be used to determine the target feature being tracked by the imaging device 10, and determine the time-lapse imaging parameter of the imaging device 10 for recording based on a setting operation of the user.

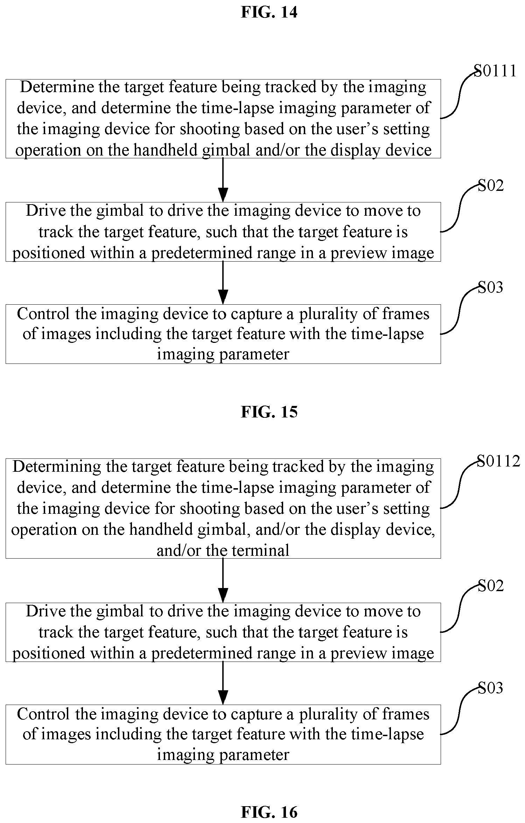

Referring to FIG. 2 and FIG. 15, in some embodiments, the gimbal 30 may be a handheld gimbal 30, and the imaging system 100 may further include a display device 40. The imaging device 10 may be mounted on the handheld gimbal 30, and the display device 40 may be mounted on a handle 31 of the handheld gimbal 30. The process at S01 may include a process S0111, determining the target feature being tracked by the imaging device 10, and determining the time-lapse imaging parameter of the imaging device 10 for recording based on the user's setting operation on the handheld gimbal 30 and/or the display device 40. The control device 20 may be used to implement the process at S0111, that is, the control device 20 may be used to determine the target feature being tracked by the imaging device 10, and determine the time-lapse imaging parameter of the imaging device 10 for recording based on the user's setting operation on the handheld gimbal 30 and/or the display device 40.

More specifically, as shown in FIG. 2, the handheld gimbal 30 includes a handle 31 and a gimbal supported by the handle 31 (the gimbal may include a plurality of connecting arms 32), and the imaging device 10 can be connect mounted on one of the connecting arms 32. The connecting arm 32 and the handle 31, and the plurality of connecting arms 32 can be relatively rotated to drive the imaging device 10 to record at different angles. The user can hold the handle 31 with one hand or both hands to use the imaging system 100 for recording. The display device 40 may be disposed on the handle 31, and the display device 40 may be a display screen with touch function. The display device 40 may also be communicatively connected with the imaging device 10, and the preview image captured by the imaging device 10 may be displayed on the display device 40. In addition, the display device 40 may also display other related information, as such the power of the handheld gimbal 30, current time, etc., and the control of the handheld gimbal 30 or the imaging device 10 may also be implemented on the display device 40. A function key 33 may also be disposed on the handle 31, and the function key 33 may be an operating component, such as a button or a dial. The control device 20 may be disposed on the handheld gimbal 30 or the imaging device 10 (in FIG. 2, the control device 20 is disposed on the handheld gimbal 30 as an example for illustration).

The imaging device 10 may include an imaging function, or the imaging device 10 may include both an imaging function and a display function. For example, the imaging device 10 may be a mobile electronic device, such as a camera or a mobile phone.

The user may perform setting operations on the function key 33 of the handheld gimbal 30; the user may perform setting operations on the display device 40; and the user may also perform setting operations on the function key 33 or the display device 40 at the same time, and the control device 20 may determine or adjust the time-lapse imaging parameter based on the above setting operations.

It can be understood that other than methods described above, the user's setting operation for the handheld gimbal 30 and/or the display device 40 may include other methods, such as the setting operation of voice input or the setting operation of gesture input based on the handheld gimbal 30 and/or the display device 40, which is not specifically limited here.

Of course, the above-mentioned setting operation may also include a setting operation of the imaging device 10 by the user.

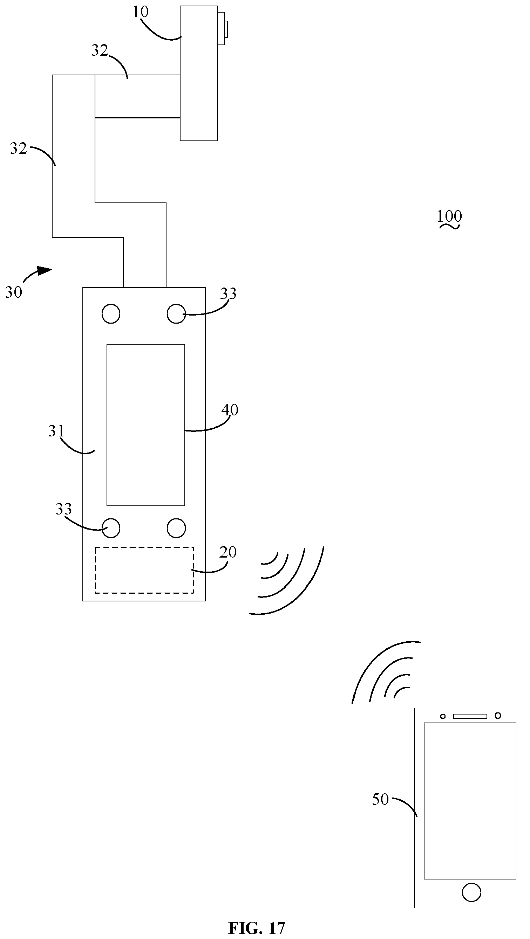

Referring to FIG. 16 and FIG. 17, in some embodiments, the gimbal 30 includes a handheld gimbal 30 and the imaging system 100 includes a display device 40 and a terminal 50. The imaging device 10 may be mounted on the handheld gimbal 30. The display device 40 may be disposed on the handle 31 of the handheld gimbal 30. The terminal 50 may communicate with the handheld gimbal 30. The process at S01 may include a process S0112, determining the target feature being tracked by the imaging device 10, and determining the time-lapse imaging parameter of the imaging device 10 for recording based on the user's setting operation on the handheld gimbal 30, and/or the display device 40, and/or the terminal 50. The control device 20 may be used to implement the process at S0112. That is, the control device 20 may be used to determine the target feature being tracked by the imaging device 10, and determine the time-lapse imaging parameter of the imaging device 10 for recording based on the user's setting operation on the handheld gimbal 30, and/or the display device 40, and/or the terminal 50.

More specifically, the handheld gimbal 30 includes a handle 31 and a gimbal supported by the handle 31 (the gimbal may include a plurality of connecting arms 32), and the imaging device 10 can be connect mounted on one of the connecting arms 32. The connecting arm 32 and the handle 31, and the plurality of connecting arms 32 can be relatively rotated to drive the imaging device 10 to record at different angles. The user can hold the handle 31 with one hand or both hands to use the imaging system 100 for recording. The display device 40 may be disposed on the handle 31, and the display device 40 may be a display screen 90 with the touch function. The display device 40 may also be communicatively connected with the imaging device 10, and the preview image captured by the imaging device 10 may be displayed on the display device 40. In addition, the display device 40 may also display other related information, as such the power of the handheld gimbal 30, current time, etc., and the control of the handheld gimbal 30 or the imaging device 10 may also be implemented on the display device 40. A function key 33 may also be disposed on the handle 31, and the function key 33 may be an operating component, such as a button or a dial. The terminal 50 may be in communication connection with the handheld gimbal 30, for example, through Bluetooth, Wi-Fi, signal transmission line, wireless connector, etc. The terminal 50 may be a terminal 50 such as a mobile phone, a remote control, a head-mounted display device, or a smart watch, and the terminal 50 may also be equipped with a display device, such as a display screen. The terminal 50 may be mounted on the handheld gimbal 30, or the handheld gimbal 30 may be mounted on the terminal 50. For example, the terminal 50 may be mounted on a side of the handle 31 of the handheld gimbal 30, or separately disposed from the handheld gimbal 30. The control device 20 may be disposed on the handheld gimbal 30, or on the imaging device 10, or on the terminal 50 (in FIG. 17, the control device 20 is disposed on the handheld gimbal 30 as an example). The preview image captured by the imaging device 10 may be displayed on the display device 40 or on the terminal 50.

After the terminal 50 is connected to the handheld gimbal 30, the terminal 50 may control the gimbal in the handheld gimbal 30, the imaging device 10, and the display device 40.

The user may perform setting operations on the function key 33 of the handheld gimbal 30; the user may perform setting operations on the display device 40; and the user may perform setting operations on the terminal 50. In addition, the user may perform setting operations on the function key 33 of the handheld gimbal 30 or the display device 40 at the same time; the user may perform setting operations on the function key 33 of the handheld gimbal 30 or the terminal 50 at the same time; the user may perform setting operations on the display device 40 or the terminal 50 at the same time; and the user may perform setting operations on the function key 33 of the handheld gimbal 30, the display device 40, and the terminal 50 at the same time. The control device 20 may determine or adjust the time-lapse imaging parameter based on the above setting operations.

It can be understood that other than methods described above, the user's setting operation for the handheld gimbal 30, and/or the display device 40, and/or the terminal 50 may include other methods, such as the setting operation of voice input or the setting operation of gesture input based on the handheld gimbal 30, and/or the display device 40, and/or the terminal 50, which is not specifically limited here.

Of course, the above-mentioned setting operation may also include a setting operation of the imaging device 10 by the user.

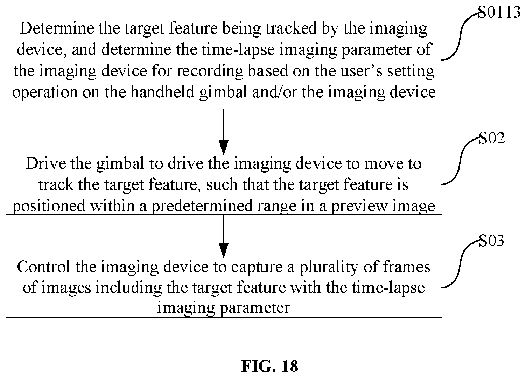

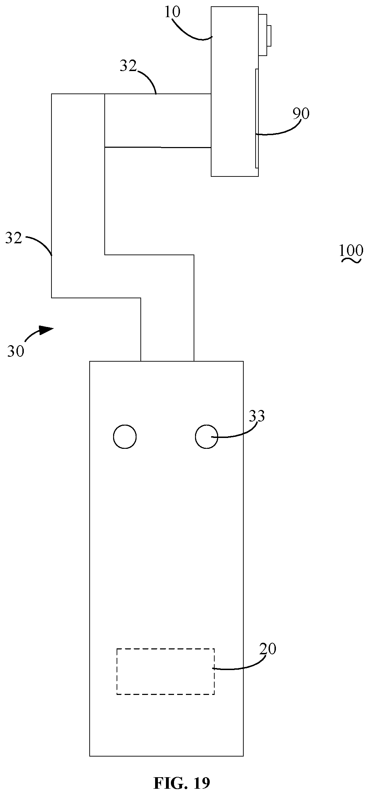

Referring to FIG. 18 and FIG. 19, in some embodiments, the gimbal 30 includes a handheld gimbal 30, and the imaging device 10 is mounted on the handheld gimbal 30. The process at S01 may include a process S0113, determining the target feature being tracked by the imaging device 10, and determining the time-lapse imaging parameter of the imaging device 10 for recording based on the user's setting operation on the handheld gimbal 30 and/or the imaging device 10. The control device 20 may be used to implement the process at S0113. That is, the control device 20 may be used to determine the target feature being tracked by the imaging device 10, and determine the time-lapse imaging parameter of the imaging device 10 for recording based on the user's setting operation on the handheld gimbal 30 and/or the imaging device 10.

More specifically, the handheld gimbal 30 may include a handle 31 and a plurality of connecting arms 32 supported by the handle 31, and the imaging device 10 may be mounted on one of the connecting arms 32. The connecting arm 32 and the handle 31, and the plurality of connecting arms 32 can be relatively rotated to drive the imaging device 10 to record at different angles. The user can hold the handle 31 with one hand or both hands to use the imaging system 100 for recording. A function key 33 may also be disposed on the handle 31, and the function key 33 may be an operating component, such as a button or a dial. The imaging device 10 may be a camera, a mobile phone, a remote control, a head-mounted display device, a smart watch etc. In one example, a display screen 90 may be disposed on the imaging device 10, and the preview image captured by the imaging device 10 may be displayed on the display screen 90. The /handheld gimbal 30 may be disposed on the handheld gimbal 30 or the imaging device 10 (in FIG. 17, the control device 20 is disposed on the handheld gimbal 30 as an example).

The user may perform setting operations on the function key 33 of the handheld gimbal 30; the user may perform setting operations on the imaging device 10; and the user may also perform setting operations on the function key 33 of the handheld gimbal 30 or the imaging device 10 at the same time, and the control device 20 may determine or adjust the time-lapse imaging parameter based on the above setting operations.

It can be understood that other than methods described above, the user's setting operation for the handheld gimbal 30 and/or the imaging device 10 may include other methods, such as the setting operation of voice input or the setting operation of gesture input based on the handheld gimbal 30 and/or the imaging device 10, which is not specifically limited here.

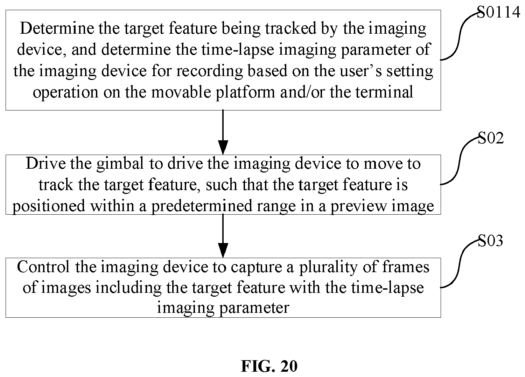

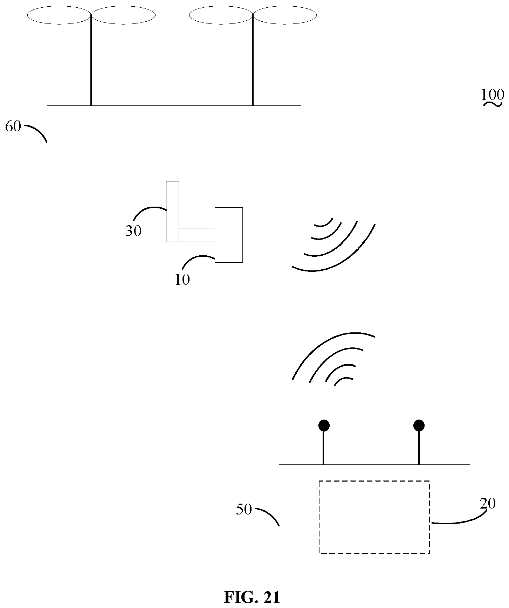

Referring to FIG. 20 and FIG. 21, in some embodiments, the imaging system 100 further includes a movable platform 60 and a terminal 50, the terminal 50 being used to control the movable platform. The imaging device 10 may be mounted on the movable platform 60. The process at S01 may include a process S0114, determining the target feature being tracked by the imaging device 10, and determining the time-lapse imaging parameter of the imaging device 10 for recording based on the user's setting operation on the movable platform 60 and/or the terminal 50. The control device 20 may be used to implement the process at S0114. That is, the control device 20 may be used to determine the target feature being tracked by the imaging device 10, and determine the time-lapse imaging parameter of the imaging device 10 for recording based on the user's setting operation on the movable platform 60 and/or the terminal 50.

More specifically, the movable platform 60 may be an aerial mobile platform, such as an unmanned aerial vehicle (FIG. 21 takes the movable platform as an aerial unmanned vehicle as an example for illustration). The movable platform 60 may be a surface mobile platform, such as an unmanned ship. The movable platform 60 may be a ground mobile platform, such as an unmanned vehicle. The imaging device 10 may be connected to the movable platform 60 through the gimbal 30. The terminal 50 may be used to control the movable platform 60. The terminal 50 may be a terminal 50 such as a mobile phone, a remote control, a head-mounted display device, a smart watch, etc. The terminal 50 may be in communication connection with the movable platform 60, and control the movement of the movable platform 60 by sending a control instruction to the movable platform 60. The control device 20 may be disposed on the movable platform 60, the terminal 50, or the imaging device 10 (in FIG. 21, the control device 20 is disposed on the terminal 50 as an example for illustration).

The user may perform setting operations on the movable platform 60; the user may perform setting operations on the terminal 50; and the user may also perform setting operations on the movable platform 60 and the terminal 50 at the same time, and the control device 20 may determine or adjust the time-lapse imaging parameter based on the above setting operations.

It can be understood that other than methods described above, the user's setting operation for the movable platform 60 and the terminal 50 may include other methods, such as the setting operation of voice input or the setting operation of gesture input based on the movable platform 60 and the terminal 50, which is not specifically limited here.

Of course, the above-mentioned setting operation may also include a setting operation of the imaging device 10 by the user.

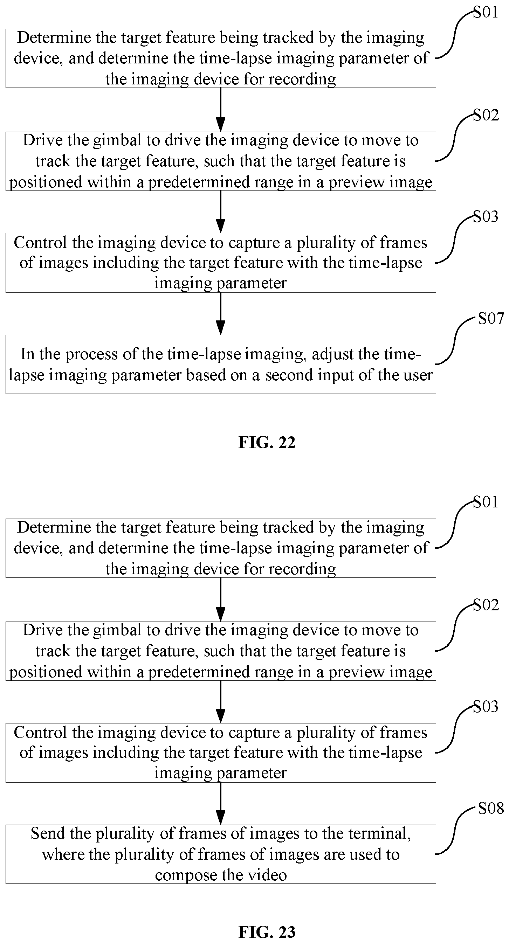

Referring to FIG. 22, in some embodiments, the control method further includes a process S07, in the process of the time-lapse imaging, adjusting the time-lapse imaging parameter based on a second input of the user. The control device 20 may also be used to implement the process at S07. That is, the control device 20 may be used to adjust the time-lapse imaging parameter based on a second input of the user in the process of the time-lapse imaging.

More specifically, adjusting the time-lapse imaging parameter may be increasing or decreasing the total time-lapse imaging time, adjusting the time-lapse imaging trajectory, increasing or decreasing the number of time-lapse imaging shots, adjusting the time-lapse imaging time interval, etc. Taking the imaging system 100 shown in FIG. 2 as an example, the second input of the user may be an input operation on the function key 33 on the handheld gimbal 30, an input operation on the display device 40, or an input operation on the terminal 50. In one example, a slider representing the imaging time interval of the time-lapse imaging may be displayed in the preview image, and the user may adjust the imaging time interval of the time-lapse imaging by dragging the specific position of the slider.

Referring to FIG. 17 and FIG. 23, in some embodiments, the imaging system 100 further includes a terminal 50, and the terminal 50 is in communication connection with the imaging device 10. The control method further includes a process S08, sending the plurality of frames of images to the terminal 50, where the plurality of frames of images are used to compose the video. The control device 20 may also be used to implement the process at S08. That is, the control device 20 may be used to send the plurality of frames of images to the terminal 50, where the plurality of frames of images are used to compose the video.

More specifically, the terminal 50 may be a terminal 50 such as a mobile phone, a remote control, a head-mounted display device, a smart watch, etc. The terminal 50 may be in communication connection with the imaging device 10, for example, through Bluetooth, Wi-Fi, signal transmission line, wireless connector, etc. The control device 20 may be used to send the plurality of frames of images captured by the imaging device 10 to the terminal 50, and the terminal 50 may further compose the video based on the plurality of frames of images. In this way, the imaging device 10 may not need to store the plurality of frames of images and compose the video, thereby reducing the storage and processing burden of the imaging device 10.

In some embodiments, the predetermined range may be the field of view of the preview image. That is, when the imaging device 10 is driven and tracking the target feature, the target feature may be constantly in the field of view of the preview image, thereby preventing the imaging device 10 from losing track of the target feature when the target feature moves relative to the imaging device 10.

In some embodiments, the predetermined range may be a predetermined target position in the preview image. That is, when the imaging device 10 is driven and tracking the target feature, and the target feature may be constantly at the target position of the preview image. The target position may be a composition position set by the user, such that it is convenient for the user to compose the image during the time-lapse imaging. Alternatively, the target position may be other predetermined positions, such as the 1/3 position in the horizontal direction or the center position of the preview image.

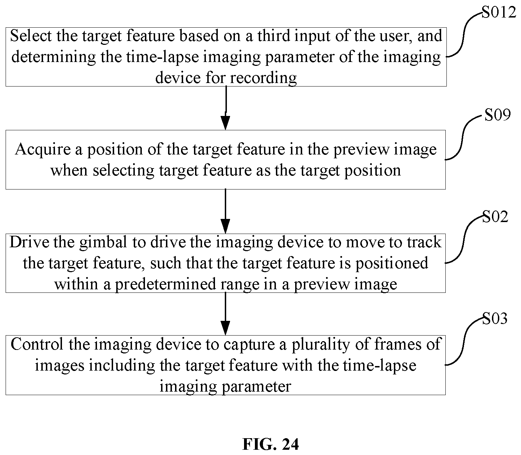

Referring to FIG. 24, in some embodiments, the process at S01 may further include a process S012, selecting the target feature based on a third input of the user, ad determining the time-lapse imaging parameter of the imaging device 10 for recording. The control method may further include a process S09, acquiring the position of the target feature in the preview image when selecting target feature as the target position. The control device 20 may also be used to implement the processes at S012 and S09. That is, the control device 20 may be used to select the target feature based on the third input of the user, and determine the time-lapse imaging parameter of the imaging device 10 for recording; and, acquire the position of the target feature in the preview image when selecting target feature as the target position.

The third input of the user may be an input predetermined by the user. In this embodiment, the user may first move the imaging device 10, such that the feature to be selected as the target feature may be positioned at the target position, and then select the target feature with the third input. When the target feature is selected, the current positon of the target feature in the preview image may be selected as the target position, and the operation of selecting the target position is simple and quick.

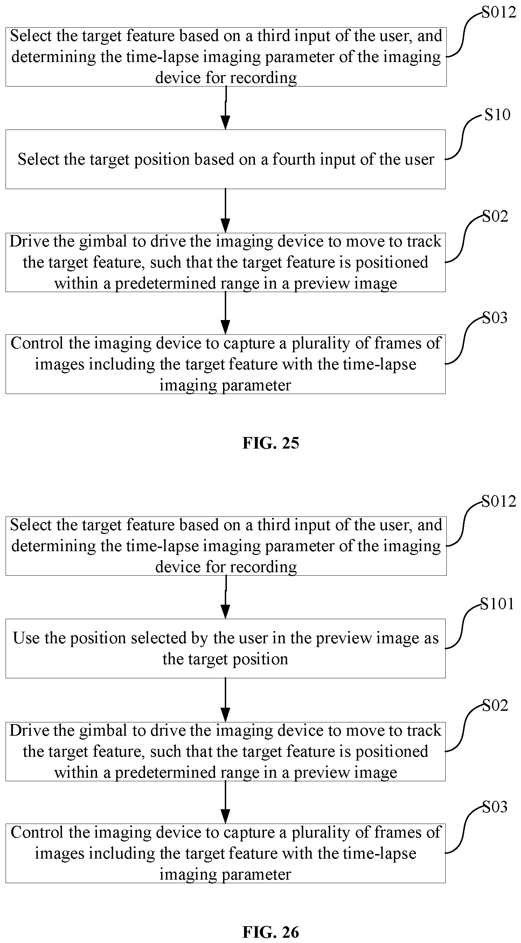

Referring to FIG. 25, in some embodiments, the process at SOI may further include a process S012, selecting the target feature based on a third input of the user, and determining the time-lapse imaging parameter of the imaging device 10 for recording. The control method may further include a process S10, selecting the target position based on a fourth input of the user. In some embodiments, the control device 20 may be used to implement the processes at S012 and S10. That is, the control device 20 may be used to select the target feature based on the third input of the user, and determine the time-lapse imaging parameter of the imaging device 10 for recording; and, select the target position based on the fourth input of the user.

The third input and the fourth input of the user may both be input predetermined by the user. In this embodiment, when the user selects the target feature, the target feature may be positioned anywhere in the preview image. After the target position is selected based on the fourth input of the user, the control device 20 may automatically drive the imaging device 10 to track the target feature, and cause the target feature to be constantly positioned at the target position of the preview image.

More specifically, referring to FIG. 26. In one example, the process at S10 may include a process S101, using the position selected by the user in the preview image as the target position. The control device 20 may be used to implement the process at S101. That is, the control device 20 may be used to use the position selected by the user in the preview image as the target position. After the target feature is selected, a prompt message may be displayed in the preview image, such as "Please select the composition position," etc. The user may directly click on a position in the preview image, and the imaging device 10 will be driven to cause the target feature to be at that position. If the user is satisfied with the position, the user may further click on the preview image to confirm. Alternatively, if the user is not satisfied with the position, the user may click a new position and the imaging device 10 will be driven to cause the target feature to be at that position until the user clicks on the preview image to confirm the target position.

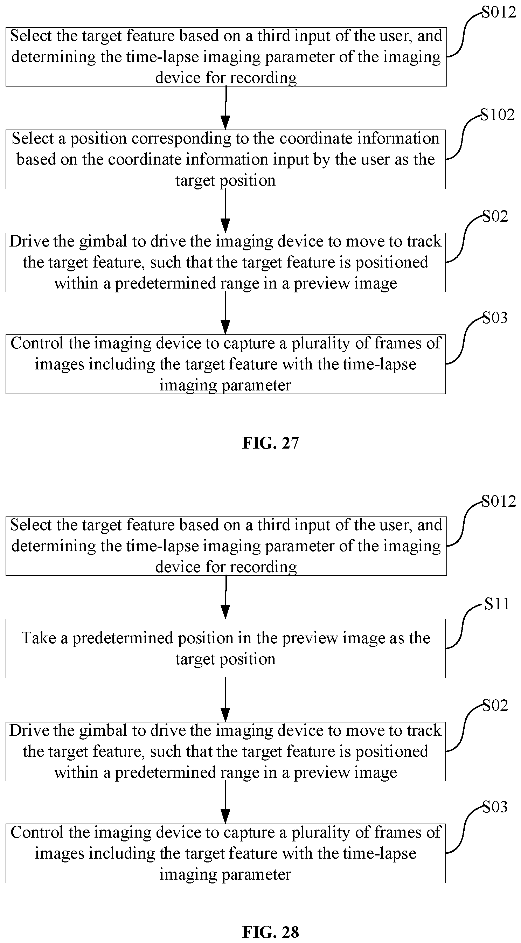

Referring to FIG. 27, in one example, the process at S10 may include a process S102, selecting a position corresponding to the coordinate information based on the coordinate information input by the user as the target position. The control device 20 may be used to implement the process at S102. That is, the control device 20 may be used to select a position corresponding to the coordinate information based on the coordinate information input by the user as the target position. After the user selects the target feature, an input box may be displayed in the preview image. The user may input the coordinate information of the target position in the input box, and the imaging device 10 will be driven the cause the target feature to be at the coordinate, such that the user can accurately select the target position.

It can be understood that in addition to the description above, the fourth input may also be other inputs in practical applications. For example, in the screen where the preview image is located, a steering wheel may also be displayed. Through the operation of the steering wheel, the corresponding position in the preview image may be selected as the target position, which is not specifically limited here.

Referring to FIG. 28, in some embodiments, the process at S01 may further include a process S012, selecting the target feature based on a third input of the user, and determining the time-lapse imaging parameter of the imaging device 10 for recording. The control method may further include a process S11, taking a predetermined position in the preview image as the target position. The control device 20 may be used to implement the processes at S012 and S11. That is, the control device 20 may be used to select the target feature based on the third input of the user, and determine the time-lapse imaging parameter of the imaging device 10 for recording; and, take the predetermined position in the preview image as the target position. The predetermined position may be a position predetermined by the user, or the predetermined position may be a target position commonly used by the user in previous time-lapse imaging, or the predetermined position may be a target position recommended by the imaging system 100 based on the type of target feature, which is beneficial to composition, etc. In one example, the predetermined position may be the center position of the preview image. Of course, the predetermined position may also be other positons, which is not limited here. For example, the preview image may be divided into nine square grids, and the predetermined position may be the positon of any grid in the nine square grids. In this embodiment, after the user selects the target feature, the target feature can be automatically selected without further operations, which is easy to operate.

Referring to FIG. 17, FIG. 29, and FIG. 30. In some embodiments, the imaging system 100 further includes a display device 40 and/or a terminal 50 communicatively connected with the imaging device 10, and the display device 40 and/or the terminal 50 being used to display the preview image. The process at S012 may further include a process S0121, selecting the feature corresponding to the predetermined position of a graphic frame 400 as the target feature based on the user's frame selection operation on the display device 40 and/or the terminal 50, the frame selection operation being an operation of frame selecting in the preview image with the graphic frame 400. The control device 20 may be used to implement the processes at S0121 and S11. That is, the control device 20 may be used to select the feature corresponding to the predetermined position of the graphic frame 400 as the target feature based on the user's frame selection operation on the display device 40 and/or the terminal 50, the frame selection operation being an operation of frame selecting in the preview image with the graphic frame 400.

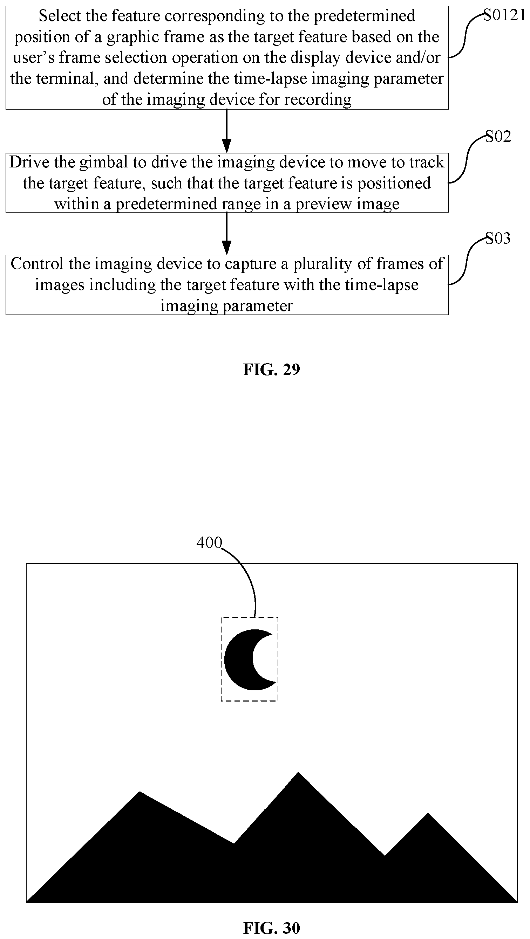

The process at S0121 may be implemented by the control device 20 of the imaging system 100 in FIG. 2, FIG. 17, and FIG. 21. For example, the preview image may be displayed on the terminal 50 in FIG. 17 and FIG. 21, or on the display device 40 in FIG. 2 and FIG. 17. Referring to FIG. 30, the user may use the graphic frame 400 to perform the frame selection operation on the preview image, where the shape of the graphic frame 400 may be any shape such as rectangle, circle, ellipse, triangle, etc. It can be understood that the graphic frame 400 may select a plurality of features at the same time, such as a plurality of features of the same object or a plurality of features of different objects. In this embodiment, the feature corresponding to the predetermined positon of the graphic frame 400 is used as the target feature, and the target feature may include one or more features. The predetermined positon may be a position associated with the graphic frame 400 predetermined by the user. In one example, the graphic frame 400 may be a centrally symmetric shape, such as a rectangle, a circle, etc., and the predetermined position may be the center position of the graphic frame. Of course, the specific shape and the predetermined position of the graphic frame 400 may be selected based on different needs. For example, the predetermined position may also be within the frame of the graphic frame 400, which is not limited here.

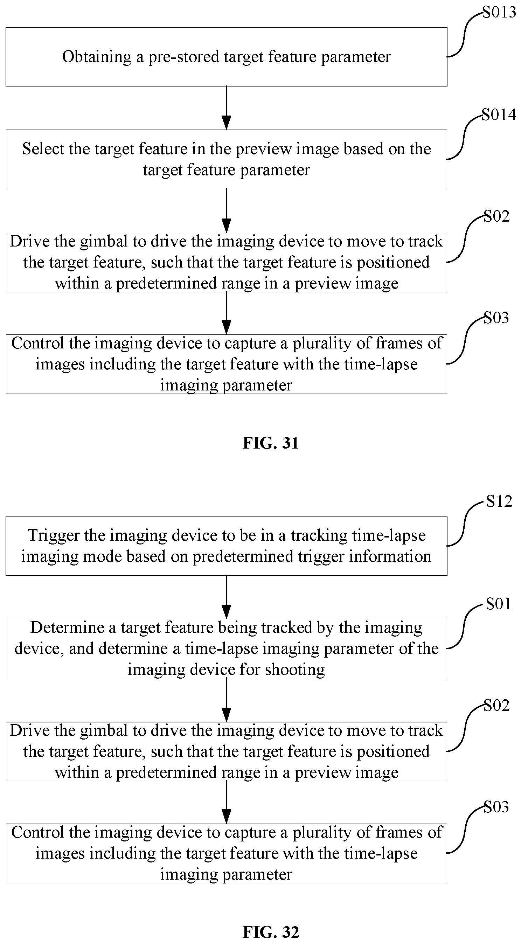

Referring to FIG. 31, in some embodiments, the process at S01 may include a process S013, obtaining a pre-stored target feature parameter; and a process S014, selecting the target feature in the preview image based on the target feature parameter.

In some embodiments, the control device 20 may be used to implement the processes at S013 and S014. That is, the control device 20 may be used to obtain the pre-stored target feature parameter and select the target feature in the preview image based on the target feature parameter.

More specifically, the target feature parameter may be predetermined. The control device 20 may automatically search the preview image for the target feature matching the target feature parameter. For example, the target feature parameter may be a parameter used to indicate facial features. The control device 20 may automatically search for a human face in the preview image, and use the human face as a target feature when there is a human face. In this way, the user does not need to manually select the target feature in the preview image, and the operation is simple and the target feature can be obtained more accurately.

Referring to FIG. 32, in some embodiments, before the process at S02, the control may further include a process S12, triggering the imaging device 10 to be in a tracking time-lapse imaging mode based on predetermined trigger information, the tracking time-lapse imaging mode being capable of tracking the target feature and performing the time-lapse imaging of the target feature. The control device 20 may be used to implement the process at S012. That is, the control device 20 may be used to trigger the imaging device 10 to be in a tracking time-lapse imaging mode based on predetermined trigger information. Referring to FIG. 17, the trigger information may be a trigger operation performed by the user on the display device 40 or the terminal 50. For example, the user may select "tracking time-lapse imaging". The trigger information may also be other predetermined operation. Taking the imaging system 100 shown in FIG. 2 and FIG. 17 as an example. The trigger information may also be the user shaking the handheld gimbal 30 with a certain amplitude or frequency. After the shaking is detected, it may be regarded as generating the trigger information. In this way, there are many ways for the user to put the imaging device 10 in the tracking time-lapse imaging mode, and the way to enter the tracking time-lapse imaging mode is convenient and quick.

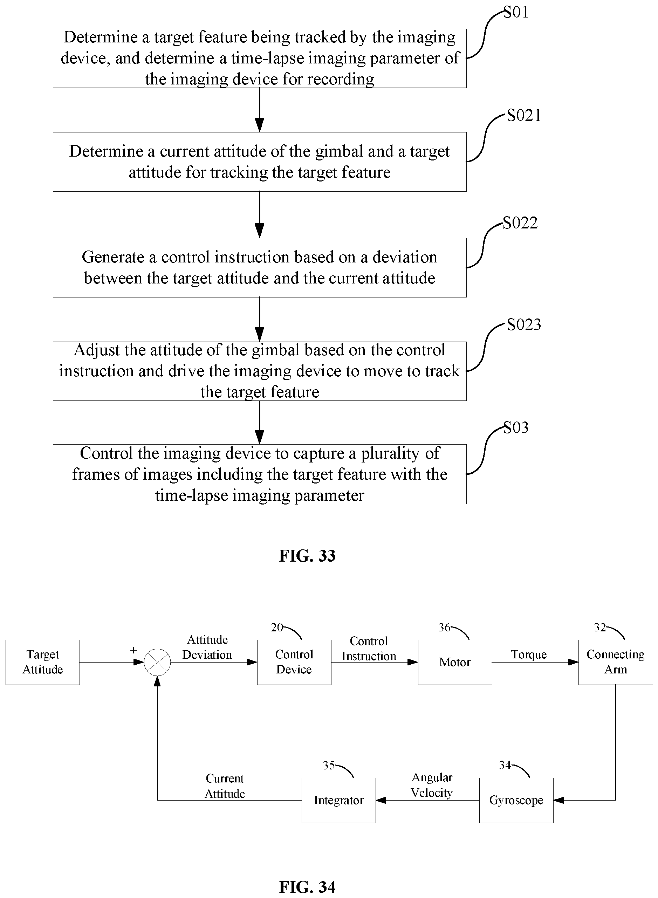

Referring to FIG. 2 and FIG. 33, in some embodiments, the process at S02 may include a process S021, determining a current attitude of the gimbal 30 and a target attitude for tracking the target feature; a process S022, generating a control instruction based on a deviation between the target attitude and the current attitude; and, a process S023, adjusting the attitude of the gimbal 30 based on the control instruction and driving the imaging device 10 to move to track the target feature.

In some embodiments, the control may be used to implement the processes at S021, S022, and S023. That is, the control device 20 may be used to determine the current attitude of the gimbal 30 and the target attitude for tracking the target feature; generating a control instruction based on the deviation between the target attitude and the current attitude; and, adjust the attitude of the gimbal 30 based on the control instruction and drive the imaging device 10 to move to track the target feature.

The gimbal 30 may be a handheld gimbal 30 (as shown in FIG. 2, FIG. 17, and FIG. 19). The gimbal 30 may also be a gimbal 30 mounted on a movable platform 60 (as shown in FIG. 21).

It can be understood that the attitude adjustment of the gimbal 30 may also be an adaptive adjustment of the gimbal 30 to the imaging device 10 for tracking the target feature, or the adaptive adjustment of other devices used in the gimbal 30 to the imaging device 10 for tracking the target feature, which is not specifically limited here.

Referring to FIG. 2 and FIG. 34, taking the imaging device 10 being mounted on the handheld gimbal 30 as an example, during the time-lapse imaging, when the target feature moves relative to the imaging device 10, the position of the target feature in the preview image may change, which may exceed the above-mentioned predetermined range. The control device 20 may obtain the target attitude of the handheld gimbal 30 based on the current position of the target feature and the position of the predetermined range, where the target attitude may be represented by the joint angle between the plurality of connecting arms 32. The current position of the handheld gimbal 30 may be measured by an inertial measurement unit in the handheld gimbal 30, and the inertial measurement unit may include a gyroscope. The control device 20 may integrate the angular velocity measured by the gyroscope 34 by an integrator 35 to obtain the current attitude of the handheld gimbal, and further generate a control instruction based on the attitude deviation between the target attitude and the current attitude. More specifically, the angle at which each joint of the handheld gimbal 30 should be rotated may be calculated based on the attitude deviation, and the corresponding control instruction may be generated. The control device 20 may adjust the attitude of the handheld gimbal 30 based on the control instruction. More specifically, a motor 36 of the handheld gimbal 30 can respond to the control instruction and drive the connecting arms 32 of the handheld gimbal 30 to rotate based on the angle to be rotated. The connecting arms 32 can drive the imaging device 10 to track the target.

It can be understood that in the above embodiment, the control device 20 may include one or more processors. The one or more processors may be integrated or independent, such as one processor in the imaging device and one processor in the gimbal. The one or more processors may be used to individually or cooperatively execute any process in the above-mentioned embodiments. The various processes of the control method in the foregoing embodiments may be combined in any feasible manner, and are not limited to the specific example combination manner.

It should be noted that in the above embodiment, the imaging system may be used as one device. For example, the handheld gimbal 30, the imaging device 10, and the display device 40 may be an integrated device, or may include two or more independent devices. The specific setting can be performed as needed, which is not specifically limited here.

When the imaging device 10 is disposed on the gimbal 30 to be driven, the imaging device 10 and the gimbal 30 may communicate directly or indirectly, such that during the movement of the gimbal 30 or the target feature, the target feature can be kept within the predetermined range of the preview image generated by the imaging device 10.

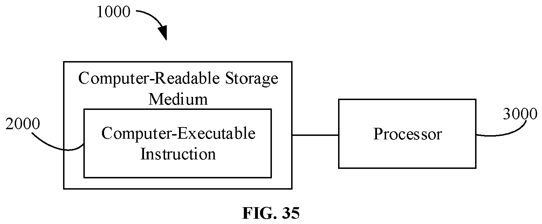

Referring to FIG. 35, one or more non-volatile computer-readable storage mediums 1000 of an embodiment of the present disclosure includes computer-executable instructions 2000. When the computer-executable instructions 2000 are executed by one or more processors 3000, the processors 3000 may execute the time-lapse imaging control method of any of the above embodiments. For example, the processors 3000 may execute the process at S01, determining a target feature being tracked by the imaging device 10, and determining a time-lapse imaging parameter of the imaging device 10 for recording; the process at S02, driving the gimbal 30 to drive the imaging device 10 to move to track the target feature, such that the target feature may be positioned within a predetermined range in a preview image; and the process at S03, controlling the imaging device 10 to capture a plurality of frames of images including the target feature with the time-lapse imaging parameter.

In the description of this specification, the description with reference to the terms "certain embodiments", "one embodiment", "some embodiments", "examples", "specific examples", or "some examples", etc., means that the implementation is combined with specific features, structures, materials, or characteristics described in the embodiments or examples are included in at least one embodiment or example of the present disclosure. In this specification, the schematic expressions of the above terms are not necessarily directed to the same embodiment or example. Furthermore, the particular features, structures, materials, or characteristics described may be combined in any suitable manner in any one or more embodiments or examples. In addition, when no conflicts exist, those skilled in the art may combine different embodiments or examples and features of the different embodiments or examples described in this specification.

In addition, the terms "first" and "second" are used for descriptive purposes only and cannot be understood as indicating or implying relative importance or implicitly indicating the number of technical features indicated. Therefore, the features defined as "first" and "second" may explicitly or implicitly include at least one of the described features. In the description of the present disclosure, the meaning of "plurality" is at least two, e.g., two, three, unless specifically defined otherwise.

Although the embodiments of the present disclosure have been shown and described above, it can be understood that the above embodiments are exemplary and should not be construed as limitations on the present disclosure. Those skilled in the art can change, modify, substitute, or vary the above embodiments within the scope of the present disclosure. The scope of the present disclosure is defined by the appended claims and their equivalents.

## Claims

1. A time-lapse imaging control method for controlling an imaging system, the imaging system including a gimbal and an imaging device, the imaging device being mounted on the gimbal, the method comprising:
determining a target feature being tracked by the imaging device, and determining a time-lapse imaging parameter used by the imaging device for recording;
driving the gimbal to drive the imaging device to move to track the target feature, causing the target feature to be positioned within a predetermined range in a preview image; and
controlling the imaging device to capture a plurality of frames of images including the target feature with the time-lapse imaging parameter.

2. The control method of claim 1, further comprising:
composing a video based on the plurality of frames of images.

3. The control method of claim 2, wherein composing the video based on the plurality of frames of images includes:
combining the plurality of frames of images into the video; or,
combining a first predetermined frames of images of the plurality of frames of images into the video in chronological order; or,
combining a latter predetermined frames of images of the plurality of frames of images into the video in chronological order; or,
obtaining a frame of to-be-composed image from the plurality of frames of images every predetermined frame in chorological order to obtain a plurality of frames of to-be-composed images and composing the plurality of frames of to-be-composed images into the video.

4. The control method of claim 2, wherein composing the video based on the plurality of frames of images includes:
combining the plurality of frames of images and a predetermined image into the video.

5. The control method of claim 2, further comprising:
combining audio and the video to use the audio as a background audio of the video; wherein the audio includes a predetermined audio and/or an environment sound recorded during the time-lapse imaging.

6. The control method of claim 1, further comprising:
during the time-lapse imaging, acquiring one or more additional images including the target feature based on a first input of a user; and,
adding the one or more additional images to the plurality of frames of images.

7. The control method of claim 6, wherein the time-lapse imaging parameter includes one or more of:
an imaging time interval of the time-lapse imaging, a duration of the time-lapse imaging, a number of shots captured in the time-lapse imaging, and an imaging trajectory of the time-lapse imaging.

8. The control method of claim 7, wherein:
the imaging time interval is a plurality of equal time intervals, or the imaging time interval includes a plurality of unequal time intervals.

9. The control method of claim 1, wherein determining the time-lapse imaging parameter used by the imaging device for recording includes:
determining the time-lapse imaging parameter of the imaging device for recording based on a setting operation of a user.

10. The control method of claim 9, wherein the gimbal includes a handheld gimbal, the imaging system includes a display device, the imaging device being mounted on the handheld gimbal, the display device being disposed on a handle of the handheld gimbal, and determining the time-lapse imaging parameter used by the imaging device for recording includes:
determining the time-lapse imaging parameter used by the imaging device for recording based on the setting operation of the user on the handheld gimbal and/or the display device.

11. The control method of claim 9, wherein the gimbal includes a handheld gimbal, the imaging system further includes a display device and a terminal, the imaging device being mounted on the handheld gimbal, the display device being disposed on a handle or the handheld gimbal, the terminal communicating with the handheld gimbal, and determining the time-lapse imaging parameter used by the imaging device for recording includes:
determining the time-lapse imaging parameter used by the imaging device for recording based on the setting operation of the user on the handheld gimbal, and/or the display device, and/or the terminal.

12. The control method of claim 9, wherein the gimbal includes a handheld gimbal, the imaging device being mounted on the handheld gimbal, and determining the time-lapse imaging parameter used by the imaging device for recording includes:
determining the time-lapse imaging parameter used by the imaging device for recording based on the setting operation of the user on the handheld gimbal and/or the imaging device.

13. The control method of claim 1, further comprising:
during the time-lapse imaging, adjusting the time-lapse imaging parameter based on a second input of a user.

14. The control method of claim 1, wherein the imaging system further includes a terminal, the terminal being in communication connection with the imaging device, and the control method further includes:
sending the plurality of frames of images to the terminal, the plurality of frames of images being used to compose the video.

15. The control method of claim 14, wherein:
the predetermined range is a field of view of the preview image.

16. The control method of claim 1, wherein:
the predetermined range is a predetermined target position in the preview image.

17. The control method of claim 16, wherein determining the target feature being tracked by the imaging device includes:
selecting the target feature based on a third input of a user; and
the control method further includes:
acquiring a position of the target feature in the preview image when selecting the target feature as the target position.

18. The control method of claim 16, wherein determining the target feature being tracked by the imaging device includes:
selecting the target feature based on a third input of a user; and,
the control method further includes:
selecting the target position based on a fourth input of the user.

19. The control method of claim 18, wherein selecting the target position based on the fourth input of the user includes:
using a position selected by the user in the preview image as the target position; or,
based on coordinate information input by the user, selecting a position corresponding to the coordinate information as the target position.

20. The control method of claim 16, wherein determining the target feature being tracked by the imaging device includes:
selecting the target feature based on a third input of a user; and,
the control method further includes:
using a predetermined position in the preview image as the target position.

21. The control method of claim 20, wherein:
the predetermined position includes a center position.

22. The control method of any one of claims 17 to 21, wherein the imaging system further includes a display device and/or a terminal communicatively connected with the imaging device, the display device and/or the terminal being used to display the preview image, and selecting the target feature based on the third input of the user includes:
selecting a feature corresponding to a predetermined position of a selected graphic frame as the target feature based on a frame selection operation of the user on the display device and/or the terminal, the frame selection operation being an operation of frame selecting features in the preview image with the graphic frame.

23. The control method of claim 22, wherein:
the graphic frame is a center-symmetric graphic, and the predetermined position is the center position of the graphic frames.

24. The control method of claim 1, wherein determining the target feature being tracked by the imaging device includes:
obtaining a pre-stored target feature parameter; and
selecting the target feature in the preview image based on the target feature parameter.

25. The control method of claim 1, wherein before driving the imaging device to track in the target feature, the control method further comprising:
triggering the imaging device to be in a tracking time-lapse imaging mode based on predetermined trigger information.

26. The control method of claim 1, wherein driving the gimbal to drive the imaging device to move to track the target feature includes:
determining a current attitude of the gimbal and a target attitude for tracking the target feature;
generating a control instruction based on a deviation of the target attitude from the current attitude; and
adjusting the attitude of the gimbal based on the control instruction and driving the imaging device to move to track the target feature.

27. A time-lapse imaging control device for controlling an imaging system, the imaging system including a gimbal and an imaging device, the imaging device 10 being mounted on the gimbal, the control device being configured to:
determine a target feature being tracked by the imaging device, and determine a time-lapse imaging parameter used by the imaging device for recording;
drive the gimbal to drive the imaging device to move to track the target feature, causing the target feature to be positioned within a predetermined range in a preview image; and
control the imaging device to capture a plurality of frames of images including the target feature with the time-lapse imaging parameter.

28. The control device of claim 27, wherein the control device is further configured to:
compose a video based on the plurality of frames of images.

29. The control device of claim 28, wherein the control device is further configured to:
combine the plurality of frames of images into the video; or,
combine a first predetermined frames of images of the plurality of frames of images into the video in chronological order; or,
combine a latter predetermined frames of images of the plurality of frames of images into the video in chronological order; or,
obtain a frame of to-be-composed image from the plurality of frames of images every predetermined frame in chorological order to obtain a plurality of frames of to-be-composed images and compose the plurality of frames of to-be-composed images into the video.

30. The control device of claim 28, wherein the control device is further configured to:
combine the plurality of frames of images and a predetermined image into the video.

31. The control device of claim 28, wherein the control device is further configured to:
combine audio and the video to use the audio as a background audio of the video, the audio including a predetermined audio and/or an environment sound recorded during the time-lapse imaging.

32. The control device of claim 27, wherein the control device is further configured to:
during the time-lapse imaging, acquire one or more additional images including the target feature based on a first input of a user; and,
add the one or more additional images to the plurality of frames of images.

33. The control device of claim 27, wherein the time-lapse imaging parameter includes one or more of:
an imaging time interval of the time-lapse imaging, a duration of the time-lapse imaging, a number of shots captured in the time-lapse imaging, and an imaging trajectory of the time-lapse imaging.

34. The control device of claim 33, wherein:
the imaging time interval is a plurality of equal time intervals, or the imaging time interval includes a plurality of unequal time intervals.

35. The control device of claim 27, wherein the control device is further configured to:
determine the time-lapse imaging parameter of the imaging device for recording based on a setting operation of a user.

36. The control device of claim 35, wherein the gimbal includes a handheld gimbal, the imaging system includes a display device, the imaging device being mounted on the handheld gimbal, the display device being disposed on a handle of the handheld gimbal, and the control device is further configured to:
determine the time-lapse imaging parameter used by the imaging device for recording based on the setting operation of the user on the handheld gimbal and/or the display device.

37. The control device of claim 35, wherein the gimbal includes a handheld gimbal, the imaging system further includes a display device and a terminal, the imaging device being mounted on the handheld gimbal, the display device being disposed on a handle or the handheld gimbal, the terminal communicating with the handheld gimbal, and the control device is further configured to
determine the time-lapse imaging parameter used by the imaging device for recording based on the setting operation of the user on the handheld gimbal, and/or the display device, and/or the terminal.

38. The control device of claim 35, wherein the gimbal includes a handheld gimbal, the imaging device being mounted on the handheld gimbal, and the control device is further configured to:
determine the time-lapse imaging parameter used by the imaging device for recording based on the setting operation of the user on the handheld gimbal and/or the imaging device.

39. The control device of claim 27, wherein the control device is further configured to:
during the time-lapse imaging, adjust the time-lapse imaging parameter based on a second input of a user.

40. The control device of claim 27, wherein the imaging system further includes a terminal, the terminal being in communication connection with the imaging device, and the control device is further configured to:
send the plurality of frames of images to the terminal, the plurality of frames of images being used to compose the video.

41. The control device of claim 40, wherein:
the predetermined range is a field of view of the preview image.

42. The control device of claim 27, wherein:
the predetermined range is a predetermined target position in the preview image.

43. The control device of claim 42, wherein the control device is further configured to:
select the target feature based on a third input of a user; and
acquire a position of the target feature in the preview image when selecting the target feature as the target position.

44. The control device of claim 42, wherein the control device is further configured to:
select the target feature based on a third input of a user; and,
select the target position based on a fourth input of the user.

45. The control device of claim 44, wherein the control device is further configured to:
use a position selected by the user in the preview image as the target position; or,
based on coordinate information input by the user, select a position corresponding to the coordinate information as the target position.

46. The control device of claim 42, wherein the control device is further configured to:
select the target feature based on a third input of a user; and,
use a predetermined position in the preview image as the target position.

47. The control device of claim 46, wherein:
the predetermined position includes a center position.

48. The control device of any one of claims 43 to 47, wherein the imaging system further includes a display device and/or a terminal communicatively connected with the imaging device, the display device and/or the terminal being used to display the preview image, and the control device is further configured to:
select a feature corresponding to a predetermined position of a selected graphic frame as the target feature based on a frame selection operation of the user on the display device and/or the terminal, the frame selection operation being an operation of frame selecting features in the preview image with the graphic frame.

49. The control device of claim 48, wherein:
the graphic frame is a center-symmetric graphic, and the predetermined position is the center position of the graphic frames.

50. The control device of claim 27, wherein the control device is further configured to:
obtain a pre-stored target feature parameter; and
select the target feature in the preview image based on the target feature parameter.

51. The control device of claim 27, wherein before driving the imaging device to track in the target feature, the control device is further configured to:
trigger the imaging device to be in a tracking time-lapse imaging mode based on predetermined trigger information.

52. The control device of claim 30, wherein the control device is further configured to:
determine a current attitude of the gimbal and a target attitude for tracking the target feature;
generate a control instruction based on a deviation of the target attitude from the current attitude; and
adjust the attitude of the gimbal based on the control instruction and drive the imaging device to move to track the target feature.

53. An imaging system, comprising:
a gimbal;
an imaging device, the imaging device being mounted on the gimbal; and
the control device according to any one or claims 27 to 52.

54. One or more non-volatile computer-readable storage medium including computer-executable instructions, when the computer-executable instructions are executed by one or more processors, the processor is caused to:
execute the time-lapse imaging control method according to any one of claims 1 to 26.
